# EUROPÄISCHE PATENTSCHRIFT

(11) **EP 4 257 931 B1**
(45) Veröffentlichungstag und Bekanntmachung des Hinweises auf die Patenterteilung: **15.10.2025**
(21) Anmeldenummer: 23165508.5
(22) Anmeldetag: 30.03.2023
(51) Int. Cl.: G01D 21/00, G01D 9/00, H02J 7/34

(54) **MESSGERÄT UND ZUGEHÖRIGES BETRIEBSVERFAHREN**
MEASURING DEVICE AND ASSOCIATED OPERATING METHOD
APPAREIL DE MESURE ET PROCÉDÉ DE FONCTIONNEMENT ASSOCIÉ

(30) Priorität: 08.04.2022 DE 102022108540
(43) Veröffentlichungstag der Anmeldung: 11.10.2023
(73) Patentinhaber: Testo SE & Co. KGaA, 79822 Titisee-Neustadt (DE)
(72) Erfinder: Bach, Sebastian, 79874 Breitnau (DE)
(74) Vertreter: Mertzlufft-Paufler, Cornelius

(56) Entgegenhaltungen:
- DE-B4- 102004 001 658
- US-A1- 2019 341 660

## Beschreibung

Die Erfindung betrifft ein Messgerät mit einem Sensor zur Erfassung einer Raumtemperatur oder einer Raumfeuchte als einer Umgebungsgröße. Darüber hinaus weist das Messgerät eine Messelektronik auf, die zum Auslesen des Sensors und zum Erfassen von Messwerten des Sensors eingerichtet ist. Diese Messelektronik wird von einem elektrischen Energiespeicher des Messgeräts mit elektrischer Betriebsspannung versorgt, wobei die Messelektronik über zwei Verbindungsterminals mit dem Energiespeicher verbunden ist. Die Erfindung betrifft ferner ein zugehöriges Verfahren zum temperaturoptimierten Betrieb eines solchen Messgeräts.

Solche Messgeräte sind vorbekannt und werden häufig als sogenannte Daten-Logger, oft in Form eines Funk-Loggers, eingesetzt, um Messwerte, etwa der Temperatur oder der Raumfeuchte, an einem bestimmten Ort über längere Zeiträume insbesondere drahtlos aufzunehmen und damit zu dokumentieren.

Typische Anforderungen in solchen Anwendungen sind Standzeiten von mehreren Jahren, wobei das Messgerät über einen solchen Zeitraum ohne Batteriewechsel fehlerfrei und wartungsfrei betrieben werden muss. Hierbei kommt erschwerend hinzu, dass der Temperaturbereich, in welchem sich der Daten-Logger befindet, zum Beispiel Schwankungen zwischen -25°C bis +85°C aufweisen kann. Dies ist gerade im Hinblick auf eine lange Batterielaufzeit herausfordernd, da Batterien sehr unterschiedlich auf starke Temperaturänderungen reagieren und die Gefahr eines Ausfalls der Batterie besteht.

Sensorische Vorrichtungen mit zuschaltbaren elektrischen Energiespeichern, insbesondere zuschaltbaren Pufferkondensatoren, sind beispielsweise aus DE 10 2004 001 658 B4 vorbekannt.

In US 209 0341660 A1 wird die Verwendung temperaturabhängiger unterschiedlicher Betriebsmodi für ein Gerät vorgeschlagen, welches innerhalb eines motorbetriebenen manuellen Werkzeugs, nämlich einer Kettensäge mit Verbrennungsmotor, angeordnet ist, und welches Betriebsdaten der Kettensäge erfasst und in einem Speicher ablegt.

Ausgehend von diesem technischen Hintergrund liegt der Erfindung die Aufgabe zugrunde, die Einsatzmöglichkeiten von wie eingangs beschriebenen Messgeräten zu verbessern. Insbesondere hat es sich die Erfindung zum Ziel gesetzt, die Zeitspanne zu vergrößern, in der ein solches Messgerät sicher und wartungsfrei autark von sonstigen Energiequellen betrieben werden kann.

Zur Lösung dieser Aufgabe sind erfindungsgemäß bei einem Messgerät die Merkmale von Anspruch 1 vorgesehen. Insbesondere wird somit erfindungsgemäß zur Lösung der besagten Aufgabe bei einem Messgerät der eingangs genannten Art vorgeschlagen, dass ein Pufferkondensator vorgesehen ist, der mittels des Energiespeichers aufladbar ist und der zusätzlich zum Energiespeicher einen elektrischen Strom an die Messelektronik liefern kann. Zudem ist vorgesehen, dass der Pufferkondensator zu- und abschaltbar ausgestaltet ist. Zu diesem Zweck ist eine Schaltanordnung vorgesehen, wie sie in Anspruch 1 beschrieben ist.

Mit anderen Worten schlägt die Erfindung somit vor, die elektrische Betriebsspannung, je nach Bedarf, nicht nur über den Energiespeicher, sondern auch mithilfe des dann zugeschalteten Pufferkondensators bereitzustellen. Zieht die besagte Messelektronik beispielsweise einen großen Laststrom (Stromspitze), so würde ohne die Verwendung des Pufferkondensators die Betriebsspannung möglicherweise einbrechen, was insbesondere bei niedrigen Temperaturen geschehen kann, wenn der Energiespeicher nur bestimmte maximale Ströme zur Verfügung stellen kann.

Die beschriebene technische Lösung hat somit den Vorteil, dass der Pufferkondensator Stromspitzen in Bezug auf einen Laststrom, den die Messelektronik im Betrieb des Messgeräts zieht, abpuffern kann, im Sinne einer Lieferung eines zusätzlichen Stroms. D.h., tritt eine solche Stromspitze auf, so muss diese nicht vollständig vom Energiespeicher bedient werden, sondern der Strom wird dann zumindest teilweise von dem Pufferkondensator bereitgestellt.

Zum Zu- und Abschalten des Pufferkondensators kann ein elektrischer Schalter, beispielsweise in Form eines Relais oder einer Transistorschaltung, vorgesehen sein.

Ferner ist erfindungsgemäß zur Lösung der Aufgabe vorgesehen, dass ein Zuschalten des Pufferkondensators in Abhängigkeit von einer erfassten Umgebungstemperatur eingerichtet ist. Hierzu ist die besagte Messelektronik dazu eingerichtet, eine Umgebungstemperatur mithilfe eines Temperatursensors fortlaufend, also insbesondere in regelmäßigen Abständen, zu erfassen und den Pufferkondensator elektrisch zuzuschalten, sobald die erfasste Umgebungstemperatur unter eine Grenztemperatur fällt.

Bei einer solchen Ausgestaltung ist es bevorzugt, wenn die Messelektronik ferner dazu eingerichtet ist, den Pufferkondensator elektrisch abzuschalten, wenn die erfasste Umgebungstemperatur die Grenztemperatur wieder überschreitet.

Unter elektrischem Abschalten kann hier insbesondere verstanden werden, dass der Pufferkondensator dadurch so von der Messelektronik und dem Energiespeicher entkoppelt wird, dass er keinen Strom mehr aus dem Energiespeicher beziehen und keinen Strom mehr an die Messelektronik liefern kann. Ist der Pufferkondensator hingegen zugeschaltet, kann er beide dieser Funktionen übernehmen.

Vorteilhaft an dieser Lösung ist, dass das Messgerät selbstständig in Abhängigkeit einer momentanen mit dem Temperatursensor erfassten Umgebungstemperatur den Pufferkondensator entweder einsetzen kann, um Spitzen des Laststroms der Messelektronik abzufangen, und/oder den Pufferkondensator, insbesondere bei höheren Temperaturen oberhalb der besagten Grenztemperatur, elektrisch vom elektrischen Schaltkreis des Messgeräts abkoppeln kann, um so unerwünschte Querströme im Kondensator zu vermeiden.

Die Erfindung hat dabei erkannt, dass der Einsatz des Pufferkondensators in der Regel nur bei niedrigen Temperaturen sinnvoll ist, also dann, wenn der elektrische Energiespeicher temperaturbedingt weniger Strom liefern kann. Bei höheren Temperaturen hingegen bietet der Energiespeicher genügend Stromstärke, sodass auf den Einsatz des Pufferkondensators verzichtet werden kann, wodurch insbesondere Leckströme vermieden werden können.

Der besagte Sensor des Messgeräts, der mit Hilfe des Energiespeichers betrieben wird, kann insbesondere der Temperatursensor sein; es kann aber auch ein anderer Sensor sein, beispielsweise ein Feuchtesensor.

Eine mögliche Ausgestaltung der Erfindung sieht vor, dass eine Vergleichslogik ausgebildet ist, welche bei Unterschreiten eines ersten Temperaturschwellenwerts ein Zuschalten des Pufferkondensators und bei Überschreiten eines zweiten Temperaturschwellwerts ein elektrisches Trennen des Pufferkondensators bewirkt. Bei einer solchen Ausgestaltung ist es bevorzugt, wenn die Vergleichslogik hierzu einen elektrischen Schalter ansteuert, der den Pufferkondensator mit dem Energiespeicher und/oder der Messelektronik elektrisch verbindet.

Der zweite Temperaturschwellwert kann hierbei identisch zu dem ersten Temperaturschwellwert sein oder aber einige Grad Celsius oberhalb des ersten Temperaturschwellwerts liegen.

Der elektrische Energiespeicher kann beispielsweise als ein nicht wiederaufladbarer elektrochemischer Energiespeicher ausgestaltet sein. Ferner ist es ebenso möglich, den Energiespeicher als einen wiederaufladbaren elektrischen Akkumulator auszugestalten.

Eine Ausgestaltung sieht vor, dass der Pufferkondensator in Bezug auf die Messelektronik elektrisch parallel zum elektrischen Energiespeicher geschalten ist. Hierbei kann sich der Pufferkondensator mit dem Energiespeicher eine gemeinsame elektrische Masse teilen.

Ein erfindungsgemäßes Messgerät kann insbesondere zur automatisch wiederkehrenden Aufnahme von Messwerten mithilfe des Sensors nach einem festgelegten und/oder einstellbaren Zeitplan ausgebildet bzw. eingerichtet sein. Dadurch können Messdaten in geordneter Weise über längere Zeiträume aufgezeichnet werden.

Mithilfe des elektrischen Energiespeichers kann das Messgerät dabei autark von sonstigen Energiequellen fortlaufend mit dem Sensor Messwerte erfassen und diese Messwerte aufzeichnen. Dadurch kann das Messgerät als ein Daten-Logger verwendet werden.

Es kann somit vorgesehen sein, dass das Messgerät als portables Handmessgerät und/oder als energieautarkes Messgerät ausgestaltet ist, insbesondere in Form eines Daten-Loggers.

Zur Lösung der eingangs genannten Aufgabe wird ferner ein erfindungsgemäßes Verfahren gemäß Anspruch 9 vorgeschlagen, mit dem sich ein temperaturoptimierter Betrieb eines Messgeräts erzielen lässt. Hierbei weist das Messgerät Merkmale auf, wie eingangs beschrieben. Zur Lösung der Aufgabe ist bei dem Verfahren vorgesehen, dass das Messgerät selbstständig und fortlaufend eine Umgebungstemperatur erfasst und in Abhängigkeit der erfassten Umgebungstemperatur einen Pufferkondensator elektrisch so zu- und abschaltet, dass der Pufferkondensator bedarfsweise, insbesondere bei niedrigen Umgebungstemperaturen unter 0 °C, elektrische Leistung aus dem internen elektrischen Energiespeicher beziehen und (bei hohem Strombedarf) zum Betrieb der Messelektronik zur Verfügung stellen kann. Zu diesem Zweck ist eine Schaltanordnung zu den beiden Verbindungsterminals, über welche die Messelektronik mit dem Energiespeicher verbunden ist, parallel geschalten, die in Anspruch 9 näher beschrieben ist.

Das Verfahren kann ferner dadurch fortgebildet werden, dass das Messgerät den Pufferkondensator abschaltet, wenn eine bestimmte Grenztemperatur überschritten wird. In diesem Fall kann keinerlei elektrischer Stromfluss vom Energiespeicher in den Pufferkondensator mehr stattfinden. Dadurch wird insbesondere verhindert, dass der Energiespeicher durch unerwünschte Leck- oder Querströme im Pufferkondensator belastet wird, was die Stand-/Laufzeit des Messgeräts unnötigerweise limitieren würde.

Die Erfindung wird nun anhand von einem Ausführungsbeispiel näher beschrieben ist aber nicht auf dieses Beispiel beschränkt. Vielmehr können weitere Ausbildungen der Erfindung aus der nachfolgenden Beschreibung in Verbindung mit der allgemeinen Beschreibung, den Ansprüchen sowie den Zeichnungen gewonnen werden.

Es zeigt:

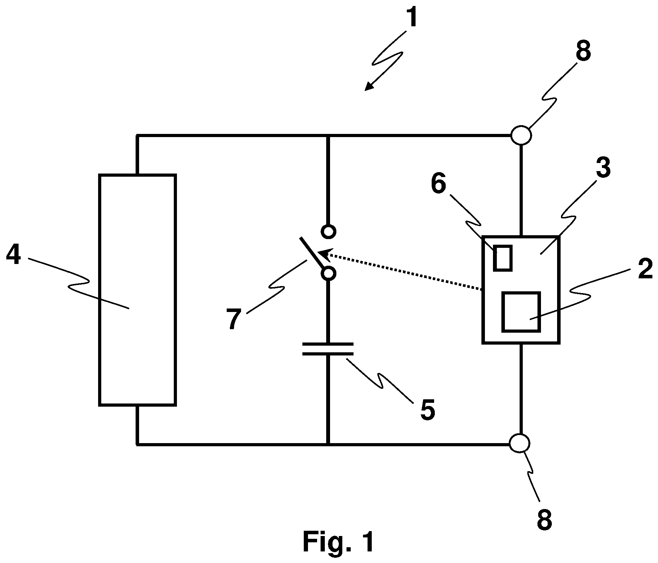

- Figur 1:: eine schematische, stark vereinfachte, Darstellung eines erfindungsgemäßen Messgeräts.

Die einzige Figur 1 zeigt eine schematische Skizze der elektrischen Komponenten eines erfindungsgemäßen Messgeräts 1. Das Messgerät 1 umfasst einen Sensor 2 zur Erfassung einer Umgebungsgröße wie etwa der Raumfeuchte und eine zugehörige Messelektronik 3, die zum Auslesen des Sensors 2 eingerichtet ist sowie zum Erfassen von Messwerten des Sensors 2.

Das Messgerät 1 der Figur 1 ist als ein Daten-Logger ausgelegt und hierfür dazu eingerichtet, automatisch in wiederkehrenden Zeitabständen Messwerte mithilfe des Sensors 2 aufzunehmen und diese Messwerte in einem internen Speicher abzulegen. Aufgrund der elektrischen Betriebsspannung, die der elektrische Energiespeicher 4 zur Verfügung stellen kann, kann das Messgerät 1 somit autark von sonstigen Energiequellen betrieben werden, umso fortlaufend Messwerte mit dem Sensor 2 zu erfassen und aufzuzeichnen.

Wie in der Figur 1 anhand der elektrischen Verbindungen illustriert ist, wird die Messelektronik 3 von einem elektrischen Energiespeicher 4 mit einer elektrischen Betriebsspannung gespeist. Parallel zu den beiden Verbindungsterminals 8 der Messelektronik 3, über welche diese elektrisch mit dem Energiespeicher 4 verbunden ist, ist eine Schaltanordnung parallel geschalten, die einen Pufferkondensator 5 sowie ein hierzu in Serie geschaltetes elektrisches Schaltmittel 7 umfasst. Das elektrische Schaltmittel 7 ist in der Figur 1 als ein elektrischer Schalter dargestellt und kann beispielsweise mit einem Halbleiterbauelement oder einem Relais realisiert werden.

Da auch die Schaltanordnung aus Pufferkondensator 5 und Schaltmittel 7 elektrisch mit dem Energiespeicher 4 verbunden ist, kann der Pufferkondensator 5 mittels des Energiespeichers 4 aufgeladen werden, wenn das Schaltmittel 7 entsprechend geschalten ist, d.h. der Schalter 7 geschlossen ist. In diesem Schaltzustand, also dann, wenn beide Pole des Pufferkondensators 5 elektrisch mit den beiden Terminals der Messelektronik 3 verbunden sind, kann der Pufferkondensator 5 zusätzlich zum Energiespeicher 4 einen elektrischen (Entlade-) Strom an die Messelektronik 3 liefern und damit die Betriebsspannung stabilisieren, welche über die beiden Terminals 8 der Messelektronik 3 abfällt.

Mit anderen Worten kann sich der Pufferkondensator 5 (sofern er zuvor ausreichend elektrisch geladen wurde aus dem Energiespeicher 4) in die beiden Terminals 8 der Messelektronik 3 entladen, sobald das Schaltmittel 7 den Pufferkondensator 5 elektrisch zuschaltet. Im Bedarfsfall kann jedoch auch durch Öffnen des Schalters 7, also durch erneutes Schalten des Schaltmittels 7, der Pufferkondensator 5 im Bedarfsfall abgeschaltet werden, d.h. elektrisch von der Messelektronik 3 getrennt werden. Mittels eines solchen elektrischen Abschaltens des Pufferkondensators 5 kann dieser somit elektrisch von der Messelektronik 3 und dem Energiespeicher 4 entkoppelt werden, sodass der Pufferkondensator 5 einerseits zwar keinen Strom mehr an die Messelektronik 3 liefern kann, aber andererseits auch keinen Strom mehr aus dem Energiespeicher 4 beziehen kann. Ein solches Vorgehen kann vorteilhaft sein, um einen Energieverbrauch aufgrund von Querströmen im Kondensator (Leckströme) zu vermeiden, da solche Querströme den Energiespeicher 4 unnötig belasten können, insbesondere dann, wenn der vom Kondensator 5 gelieferte zusätzliche Stromfluss momentan nicht benötigt wird, etwa weil keine größeren Stromspitzen im Stromverbrauch der Messelektronik 3 auftreten.

Um das Zu- und Abschalten des Pufferkondensators 5 intelligent und automatisch ablaufen zu lassen, misst die Messelektronik 3 mithilfe eines zusätzlichen Temperatursensors 6 fortlaufend die Umgebungstemperatur. Fällt die so erfasste Umgebungstemperatur unter eine vorgegebene Grenztemperatur, so schaltet die Messelektronik 3 den Pufferkondensator 5 zu, in dem sie hierfür das Schaltmittel 7 in geeigneter Weise ansteuert, wie durch den gepunkteten Pfeil in Figur 1 illustriert ist. Das heißt bei tiefen Temperaturen, bei denen typischerweise Stromspitzen auftreten können, steht der Pufferkondensator 5 zur Verfügung, um diese Stromspitzen (die im Verbrauch durch die Messelektronik 3 auftreten) abzupuffern.

Sobald die von der Messelektronik 3 mithilfe des Temperatursensors 6 erfasste Umgebungstemperatur wieder über die besagte Grenztemperatur steigt, schaltet die Messelektronik 3 den Pufferkondensator 5 durch entsprechendes erneutes Ansteuern des Schaltmittels 7 ab und unterbricht damit die elektrische Verbindung zwischen dem Pufferkondensator 5 und der Messelektronik 3. Die Grenztemperatur ist dabei so gewählt, dass die Messelektronik 3 im Temperaturbereich oberhalb der Grenztemperatur ausreichend mit elektrischem Strom von dem Energiespeicher 4 versorgbar ist. Durch das Abschalten des Pufferkondensators 5 bei wärmeren Temperaturen wird somit der gesamte Stromverbrauch des Messgeräts 1, der ja ausschließlich aus dem Energiespeicher 4 bezogen werden kann (da der Kondensator 5 elektrische Energie aus dem Energiespeicher 4 lediglich zwischenspeichern kann), reduziert, woraus eine längere Laufzeit bzw. Betriebsdauer des Messgeräts 1 folgt.

Es ist einfach vorstellbar anhand der Figur 1, dass, sofern beispielsweise das untere Anschlussterminal 8 der Messelektronik 3 geerdet wird, sich der Pufferkondensator 5 mit dem Energiespeicher 4 eine gemeinsame elektrische Masse teilt.

Das in Figur 1 gezeigte Messgerät 1 implementiert somit auch ein erfindungsgemäßes Verfahren zum temperatur-optimierten Betrieb des Messgeräts 1. Denn das Messgerät 1 erfasst selbständig und fortlaufend die Umgebungstemperatur mithilfe des separaten Temperatursensors 6 und schaltet in Abhängigkeit dieser erfassten Umgebungstemperatur, wie zuvor erläutert wurde, durch Ansteuern des entsprechenden Schaltmittels 7 den Pufferkondensator 5 elektrisch zu- bzw. ab. Dadurch wird der Pufferkondensator 5 bedarfsweise, nämlich sobald die erfasste Umgebungstemperatur unter den besagten Schwellwert sinkt, mit den Terminals 8 der Messelektronik 3 elektrisch verbunden und kann in diesem Fall zunächst elektrische Leistung aus dem internen elektrischen Energiespeicher 4 beziehen (= Aufladevorgang des Kondensators 5), um anschließend - bei Bedarf - die so zwischengespeicherte elektrische Energie in Form eines Entladestroms (Entladevorgang des Kondensators 5) in die in Figur 1 gezeigte Schaltanordnung einzuspeisen und so der Messelektronik 3 zum Betrieb derselben zur Verfügung zu stellen.

Zusammenfassend wird zur Verlängerung eines wartungsfreien und autarken Betriebs eines elektrischen Messgeräts 1, welches einen internen Energiespeicher 4 und eine Messelektronik 3 zum Auslesen eines Sensors 2 aufweist, wobei letzterer zum Erfassen einer Umgebungsgröße wie etwa einer Raumtemperatur oder Raumfeuchte, eingerichtet ist, vorgeschlagen, dass bedarfsweise, in Abhängigkeit einer mit dem Messgerät 1 erfassten Umgebungstemperatur, ein Pufferkondensator 5 mit Hilfe eines geeigneten Schaltmittels 7 so elektrisch mit dem Energiespeicher 4 verbunden wird, dass der Pufferkondensator 5 elektrische Leistung aus dem Energiespeicher 4 beziehen und diese Leistung, insbesondere beim Einbrechen einer elektrischen Betriebsspannung des Messgeräts 1, wieder zur Verfügung stellen kann, um so Stromspitzen eines Laststroms der Messelektronik 3 abzupuffern (vgl. Fig. 1).

### Bezugszeichenliste

- 1: Messgerät
- 2: Sensor
- 3: Elektronik
- 4: Energiespeicher
- 5: Pufferkondensator
- 6: Temperatursensor
- 7: Schaltmittel
- 8: Anschlussterminal (von 3)

## Patentansprüche

1. **Messgerät (1)** mit
- einem Sensor (2) zur Erfassung einer Raumtemperatur oder einer Raumfeuchte als einer Umgebungsgröße,
- einem Energiespeicher (4),
- einem Pufferkondensator (5) und
- einer Messelektronik (3), die zum Auslesen des Sensors (2) und zum Erfassen von Messwerten des Sensors (2) eingerichtet ist und von dem elektrischen Energiespeicher (4) mit elektrischer Betriebsspannung versorgt wird,
- wobei die Messelektronik (3) über zwei Verbindungsterminals (8) mit dem Energiespeicher (4) verbunden ist, **dadurch gekennzeichnet,**
- **dass** der Pufferkondensator (5) mittels des Energiespeichers (4) aufladbar ist und der Pufferkondensator (5) zusätzlich zu dem Energiespeicher (4) einen elektrischen Strom an die Messelektronik (3) liefern kann,
- **dass** der Pufferkondensator (5) zu- und abschaltbar ausgestaltet ist, wobei hierzu eine Schaltanordnung zu den beiden Verbindungsterminals (8) parallel geschalten ist, die den Pufferkondensator (5) und ein zum Pufferkondensator (5) in Serie geschaltetes elektrisches Schaltmittel (7) umfasst,
- sodass der Pufferkondensator (5) mittels des Schaltmittels (7) elektrisch zugeschalten und durch Öffnen des Schaltmittels (7) elektrisch von der Messelektronik (3) getrennt werden kann und
- **dass** die Messelektronik (3) dazu eingerichtet ist, eine Umgebungstemperatur mit Hilfe eines Temperatursensors (6) fortlaufend, insbesondere in regelmäßigen Abständen, zu erfassen und den Pufferkondensator (5) elektrisch zuzuschalten, sobald die erfasste Umgebungstemperatur unter eine Grenztemperatur fällt.

2. Messgerät (1) nach Anspruch 1, wobei die Messelektronik (3) dazu eingerichtet ist, den Pufferkondensator (5) elektrisch abzuschalten, wenn die erfasste Umgebungstemperatur die Grenztemperatur wieder überschreitet.

3. Messgerät (1) nach einem der vorhergehenden Ansprüche,
- wobei eine Vergleichslogik ausgebildet ist, welche bei Unterschreiten eines ersten Temperaturschwellwertes ein Zuschalten des Pufferkondensators (5) und bei Überschreiten eines zweiten Temperaturschwellwertes ein elektrisches Trennen des Pufferkondensators (5) bewirkt,
- vorzugsweise wobei die Vergleichslogik hierzu einen elektrischen Schalter ansteuert, der den Pufferkondensator (5) mit dem Energiespeicher (4) und/oder der Messelektronik (3) elektrisch verbindet.

4. Messgerät (1) nach einem der vorangehenden Ansprüche, wobei der elektrische Energiespeicher (4)
- als nicht wiederaufladbarer elektrochemischer Energiespeicher oder
- als wiederaufladbarer elektrischer Akkumulator ausgestaltet ist.

5. Messgerät (1) nach einem der vorangehenden Ansprüche, wobei der Pufferkondensator (5) in Bezug auf die Messelektronik (3) elektrisch parallel zum elektrischen Energiespeicher (4) geschalten ist,
- vorzugsweise und sich eine gemeinsame elektrische Masse mit dem Energiespeicher (4) teilt.

6. Messgerät (1) nach einem der vorangehenden Ansprüche, wobei das Messgerät (1) zur automatisch wiederkehrenden Aufnahme von Messwerten mit Hilfe des Sensors (2) nach einem festgelegten und/oder einstellbaren Zeitplan eingerichtet ist.

7. Messgerät (1) nach einem der vorangehenden Ansprüche, wobei das Messgerät (1) mit Hilfe des elektrischen Energiespeichers (4) autark von sonstigen Energiequellen fortlaufend mit dem Sensor (2) Messwerte erfassen und aufzeichnen kann.

8. Messgerät (1) nach einem der vorangehenden Ansprüche, wobei das Messgerät (1) als portables Handmessgerät und/oder als energieautarkes Messgerät (1), insbesondere in Form eines Daten-Loggers, ausgestaltet ist.

9. **Verfahren zum temperaturoptimierten Betrieb eines Messgeräts (1)** mit
- einem Sensor (2) zur Erfassung einer Temperatur oder einer Raumfeuchte als einer Umgebungsgröße,
- einem Energiespeicher (4),
- einem Pufferkondensator (5) und
- einer Messelektronik (3), die zum Auslesen des Sensors (2) und zum Erfassen von Messwerten des Sensors (2) eingerichtet ist und von dem elektrischen Energiespeicher (4) mit elektrischer Betriebsspannung versorgt wird,
- wobei die Messelektronik (3) über zwei Verbindungsterminals (8) mit dem Energiespeicher (4) verbunden ist,
- insbesondere wobei das Messgerät (1) nach einem der vorangehenden Ansprüche ausgestaltet ist,
**dadurch gekennzeichnet,**
- **dass** das Messgerät (1) selbständig und fortlaufend eine Umgebungstemperatur erfasst und
- in Abhängigkeit der erfassten Umgebungstemperatur den Pufferkondensator (5) elektrisch so zu- und abschaltet, dass der Pufferkondensator (5) bedarfsweise, insbesondere bei niedrigen Umgebungstemperaturen unter 0°C, elektrische Leistung aus dem internen elektrischen Energiespeicher (4) beziehen und bei Bedarf zum Betrieb der Messelektronik (3) zur Verfügung stellen kann,
- wobei hierzu eine Schaltanordnung zu den beiden Verbindungsterminals (8) parallel geschalten ist, die den Pufferkondensator (5) und ein zum Pufferkondensator (5) in Serie geschaltetes elektrisches Schaltmittel (7) umfasst,
- wobei der Pufferkondensator (5) mittels des Schaltmittels (7) elektrisch zugeschalten und durch Öffnen des Schaltmittels (7) elektrisch von der Messelektronik (3) getrennt wird.

10. Verfahren nach dem vorangehenden Anspruch,
- wobei das Messgerät (1) den Pufferkondensator (5) abschaltet, wenn eine bestimmte Grenztemperatur überschritten wird,
- insbesondere wobei dann keinerlei elektrischer Stromfluss vom Energiespeicher (4) in den Pufferkondensator (5) möglich ist.

## Claims

1. **Measuring device (1),** comprising
- a sensor (2) for detecting a room temperature or a room humidity as an ambient variable,
- an energy store (4),
- a buffer capacitor (5) and
- measuring electronics (3) which are designed to read out the sensor (2) and to acquire measured values of the sensor (2) and are supplied with electrical operating voltage by the electrical energy store (4),
- wherein the measuring electronics (3) is connected to the energy store (4) via two connection terminals (8),
**characterized**
- **in that** the buffer capacitor (5) can be charged by means of the energy store (4) and the buffer capacitor (5) can supply an electric current to the measuring electronics (3) in addition to the energy store (4),
- **in that** the buffer capacitor (5) is configured to be connectable and disconnectable, wherein, for this purpose, a switching arrangement is connected in parallel to the two connection terminals (8), which comprises the buffer capacitor (5) and an electrical switching means (7) connected in series with the buffer capacitor (5),
- so that the buffer capacitor (5) can be electrically connected by means of the switching means (7) and electrically disconnected from the measuring electronics (3) by opening the switching means (7), and
- **in that** the measuring electronics (3) is designed to continuously, in particular at regular intervals, detect an ambient temperature with the aid of a temperature sensor (6) and to electrically connect the buffer capacitor (5) as soon as the detected ambient temperature falls below a limit temperature.

2. Measuring device (1) according to claim 1, wherein the measuring electronics (3) is configured to electrically disconnect the buffer capacitor (5) if the detected ambient temperature exceeds the limit temperature again.

3. Measuring device (1) according to one of the preceding claims,
- wherein a comparison logic is formed which, when a first temperature threshold value is undershot, causes the buffer capacitor (5) to be connected and, when a second temperature threshold value is exceeded, causes the buffer capacitor (5) to be electrically disconnected,
- preferably wherein the comparison logic controls an electrical switch for this purpose, which electrically connects the buffer capacitor (5) to the energy store (4) and/or the measuring electronics (3).

4. Measuring device (1) according to one of the preceding claims, wherein the electrical energy store (4)
- is designed as a non-rechargeable electrochemical energy store or
- as a rechargeable electrical battery.

5. Measuring device (1) according to one of the preceding claims, wherein the buffer capacitor (5) is connected electrically in parallel with the electrical energy store (4) with respect to the measuring electronics (3),
- preferably and shares a common electrical ground with the energy store (4).

6. Measuring device (1) according to one of the preceding claims, wherein the measuring device (1) is designed for automatically recurring recording of measured values with the aid of the sensor (2) according to a fixed and/or adjustable time schedule.

7. Measuring device (1) according to one of the preceding claims, wherein the measuring device (1) can continuously detect and record measured values with the sensor (2) independently of other energy sources with the aid of the electrical energy store (4).

8. Measuring device (1) according to one of the preceding claims, wherein the measuring device (1) is designed as a portable handheld measuring device and/or as an energy-autonomous measuring device (1), in particular in the form of a data logger.

9. **Method for temperature-optimized operation of a measuring device (1),** comprising
- a sensor (2) for detecting a temperature or room humidity as an ambient variable,
- an energy store (4),
- a buffer capacitor (5) and
- measuring electronics (3) which are designed to read out the sensor (2) and to acquire measured values of the sensor (2) and are supplied with electrical operating voltage by the electrical energy store (4),
- wherein the measuring electronics (3) is connected to the energy store (4) via two connection terminals (8),
- in particular wherein the measuring device (1) is designed according to one of the preceding claims,
**characterized**
- **in that** the measuring device (1) independently and continuously detects an ambient temperature and
- depending on the detected ambient temperature, electrically connects and disconnects the buffer capacitor (5) in such a way that the buffer capacitor (5) can draw electrical power from the internal electrical energy store (4) as required, in particular at low ambient temperatures below 0°C, and make it available for operating the measuring electronics (3) as required,
- wherein, for this purpose, a switching arrangement is connected in parallel to the two connection terminals (8), which comprises the buffer capacitor (5) and an electrical switching device (7) connected in series with the buffer capacitor (5),
- wherein the buffer capacitor (5) is electrically connected by means of the switching device (7) and electrically disconnected from the measuring electronics (3) by opening the switching device (7).

10. Method according to the preceding claim,
- wherein the measuring device (1) switches off the buffer capacitor (5) when a certain limit temperature is exceeded,
- in particular wherein then no electrical current flow from the energy store (4) into the buffer capacitor (5) is possible.

## Revendications

1. Appareil de mesure (1) comprenant
- un capteur (2) pour détecter une température ambiante ou une humidité ambiante en tant que grandeur environnementale,
- un réservoir d'énergie (4),
- un condensateur tampon (5) et
- un circuit électronique de mesure (3), qui est conçu pour lire le capteur (2) et pour détecter des valeurs de mesure du capteur (2) et qui est alimenté en tension de fonctionnement électrique par le réservoir d'énergie électrique (4),
- dans lequel le circuit électronique de mesure (3) est relié au réservoir d'énergie (4) par deux bornes de liaison (8), **caractérisé en ce**
- **que** le condensateur tampon (5) peut être chargé au moyen du réservoir d'énergie (4) et le condensateur tampon (5) peut fournir un courant électrique au circuit électronique de mesure (3) en plus du réservoir d'énergie (4),
- **que** le condensateur tampon (5) est conçu de manière à pouvoir être connecté et déconnecté, un agencement de commutation étant à cet effet monté en parallèle avec les deux bornes de liaison (8), lequel comprend le condensateur tampon (5) et un moyen de commutation électrique (7) monté en série avec le condensateur tampon (5),
- de sorte que le condensateur tampon (5) peut être connecté électriquement à l'aide du moyen de commutation (7) et être déconnecté électriquement du circuit électronique de mesure (3) par l'ouverture du moyen de commutation (7), et
- **que** le circuit électronique de mesure (3) est conçu pour détecter en continu, en particulier à intervalles réguliers, une température ambiante à l'aide d'un capteur de température (6) et pour connecter électriquement le condensateur tampon (5) dès que la température ambiante détectée descend en dessous d'une température limite.

2. Appareil de mesure (1) selon la revendication 1, dans lequel le circuit électronique de mesure (3) est conçu pour déconnecter électriquement le condensateur tampon (5) lorsque la température ambiante détectée dépasse à nouveau la température limite.

3. Appareil de mesure (1) selon l'une des revendications précédentes,
- dans lequel est formée une logique de comparaison qui, lorsqu'une première valeur seuil de température n'est pas atteinte, provoque la connexion du condensateur tampon (5) et, lorsqu'une deuxième valeur seuil de température est dépassée, provoque la déconnexion électrique du condensateur tampon (5),
- de préférence dans lequel la logique de comparaison active à cet effet un commutateur électrique qui relie électriquement le condensateur tampon (5) au réservoir d'énergie (4) et/ou au circuit électronique de mesure (3).

4. Appareil de mesure (1) selon l'une des revendications précédentes, dans lequel le réservoir d'énergie électrique (4) est conçu
- comme un réservoir d'énergie électrochimique non rechargeable ou
- comme un accumulateur électrique rechargeable.

5. Appareil de mesure (1) selon l'une des revendications précédentes, dans lequel le condensateur tampon (5) est monté électriquement en parallèle avec le réservoir d'énergie électrique (4) par rapport au circuit électronique de mesure (3),
- et de préférence partage une masse électrique commune avec le réservoir d'énergie (4).

6. Appareil de mesure (1) selon l'une des revendications précédentes, dans lequel l'appareil de mesure (1) est conçu pour enregistrer automatiquement et de manière répétée des valeurs de mesure à l'aide du capteur (2) selon un planning défini et/ou réglable.

7. Appareil de mesure (1) selon l'une des revendications précédentes, dans lequel l'appareil de mesure (1) peut, à l'aide du réservoir d'énergie électrique (4), détecter et enregistrer en continu des valeurs de mesure avec le capteur (2) de manière autonome par rapport à d'autres sources d'énergie.

8. Appareil de mesure (1) selon l'une des revendications précédentes, dans lequel l'appareil de mesure (1) est conçu comme un appareil de mesure portable et/ou comme un appareil de mesure autonome en énergie (1), en particulier sous la forme d'un enregistreur de données.

9. Procédé de fonctionnement optimisé en température d'un appareil de mesure (1) comprenant
- un capteur (2) pour détecter une température ambiante ou une humidité ambiante en tant que grandeur environnementale,
- un réservoir d'énergie (4),
- un condensateur tampon (5) et
- un circuit électronique de mesure (3), qui est conçu pour lire le capteur (2) et pour détecter des valeurs de mesure du capteur (2) et qui est alimenté en tension de fonctionnement électrique par le réservoir d'énergie électrique (4),
- dans lequel le circuit électronique de mesure (3) est relié au réservoir d'énergie (4) par deux bornes de liaison (8),
- en particulier dans lequel l'appareil de mesure (1) est conçu selon l'une des revendications précédentes, **caractérisé en ce**
- **que** l'appareil de mesure (1) détecte de manière autonome et continue une température ambiante et
- en fonction de la température ambiante détectée, connecte et déconnecte électriquement le condensateur tampon (5) de telle sorte que le condensateur tampon (5) puisse, en cas de besoin, en particulier à des températures ambiantes inférieures à 0 °C, prélever de l'énergie électrique du réservoir d'énergie électrique interne (4) et la mettre à disposition si nécessaire pour le fonctionnement du circuit électronique de mesure (3),
- dans lequel un agencement de commutation est à cet effet monté en parallèle avec les deux bornes de liaison (8), lequel comprend le condensateur tampon (5) et un moyen de commutation électrique (7) monté en série avec le condensateur tampon (5),
- dans lequel le condensateur tampon (5) est connecté électriquement à l'aide du moyen de commutation (7) et déconnecté électriquement du circuit électronique de mesure (3) par l'ouverture du moyen de commutation (7).

10. Procédé selon la revendication précédente,
- dans lequel l'appareil de mesure (1) déconnecte le condensateur tampon (5) lorsqu'une température limite déterminée est dépassée,
- en particulier dans lequel aucun flux de courant électrique du réservoir d'énergie (4) vers le condensateur tampon (5) n'est alors possible.
